# EUROPEAN PATENT SPECIFICATION

(11) **EP 2 614 555 B1**
(45) Date of publication and mention of the grant of the patent: **26.08.2020**
(21) Application number: 11823988.8
(22) Date of filing: 02.09.2011
(51) Int. Cl.: H01Q 1/22, H01Q 1/24, H01Q 3/24, H01Q 3/26, H01Q 21/20

(54) **CONFIGURING ANTENNA ARRAYS OF MOBILE WIRELESS DEVICES USING MOTION SENSORS**
KONFIGURATION VON ANTENNENARRAYS DRAHTLOSER MOBILFUNKGERÄTE MITHILFE VON BEWEGUNGSMELDERN
CONFIGURATION DE RÉSEAUX D'ANTENNES DE DISPOSITIFS MOBILES SANS FIL AU MOYEN DE CAPTEURS DE MOUVEMENT

(30) Priority: 10.09.2010 US 879186
(43) Date of publication of application: 17.07.2013
(73) Proprietor: Qualcomm Incorporated, San Diego, CA 92121-1714 (US)
(72) Inventor: HUSTED, Paul J., San Jose, CA 95110 (US); SMITH, Jeffrey L., San Jose, CA 95110 (US)
(74) Representative: Loveless, Ian Mark
(86) International application number: PCT/US2011/050313
(87) International publication number: WO 2012/033713

(56) References cited:
- EP-A1- 1 124 391
- EP-A2- 1 369 954
- WO-A1-99/27610
- GB-A- 2 423 191
- US-A1- 2002 113 742
- US-A1- 2007 159 404
- US-B1- 6 768 455
- US-B1- 7 570 210

## Description

### Field of the Disclosure

The present invention relates generally to wireless communication, and more particularly to configuring antenna arrays of mobile wireless devices using motion sensors.

### Description of the Related Art

Wireless communication is being used in a plethora of mobile devices, such as in laptops, cell phones, and other communication devices. Some mobile wireless devices obtain connectivity to a wireless network via a peer wireless device while others rely on an Access Point (AP) to provide connectivity to the wireless network. However, AP locations may be scattered or sparse thereby limiting the reception range for the mobile wireless device. Some mobile wireless devices monitor at regular intervals, parameters indicative of the reception range of a communications channel. In the event that a mobile wireless device's reception range is weak, the orientation of the mobile wireless device's antenna can be altered to a new orientation thereby improving the device's reception range. Various techniques can be used to determine the new configuration of the antenna's orientation. These techniques can consume significant processing time and power and as such, are typically performed on a periodic basis. However, in situations where a mobile wireless device is moving continuously and rapidly, these techniques may not be able to adapt to the sudden changes in the device's orientation in a timely manner to improve the device's reception range. Therefore, improvements in mobile wireless communications are needed. WO 99/27610 A1 describes a primary radio station communicates with a portable radio station comprising a controllable antenna structure coupled to a transceiver, and in which a geomagnetic field is sensed. The portable radio station may be freely oriented with respect to a fixed coordinate system, and the geomagnetic field is sensed three-dimensionally, and the controllable antenna structure is controlled on the basis of three-dimensional sensing information, such that, after an initial adjustment of the controllable antenna structure to a predetermined direction, the antenna structure substantially remains directed in the predetermined direction, irrespective of an orientation of the portable radio station.

### Summary of the Invention

The invention is defined in the appended claims to which reference should now be made. Embodiments of the invention relate to a mobile wireless device that includes an antenna array for receiving and/or transmitting wireless signals, a motion sensor coupled to the antenna array, and a first circuitry coupled to the antenna array.

### Brief Description of the Drawings

A better understanding of the present invention can be obtained when the following Detailed Description of the Embodiments is read in conjunction with the following drawings, in which:
Figures 1A and 1B illustrates exemplary mobile wireless devices communicating with an access point;
Figure 1C illustrates communication between a mobile wireless device and a mobile access point;
Figures 2A-2E illustrate the use of beam frames for communication between a mobile wireless device and an access point;
Figures 3A and 3B are exemplary block diagrams of mobile wireless devices;
Figure 4 is a flowchart diagram illustrating a method for configuring an antenna array of a mobile wireless device using a motion sensor;
Figure 5 is a flowchart diagram illustrating a method for configuring a sector antenna array of a mobile wireless device using a motion sensor;
Figure 6 is a flowchart diagram illustrating a method for configuring an array of omnidirectional antennas of a mobile wireless device using a motion sensor; and
Figure 7 is a flowchart diagram illustrating a method for configuring an array of omnidirectional antennas of a mobile wireless device using a motion sensor without recalibrating the antenna.

While the invention is susceptible to various modifications and alternative forms, specific embodiments thereof are shown by way of example in the drawings and are herein described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

### Detailed Description of Embodiments of the Invention

Embodiments of the mobile wireless device disclosed herein may operate to reconfigure its antenna array based on detected changes in the device's orientation by an onboard motion sensor. Examples do not form part of the invention but might be suitable for understanding the invention.

In some examples, the antenna array is a sectorized antenna array. In response to a motion sensor detecting a change in orientation, the method may reconfigure the antenna array in response to the detected change in orientation. Reconfiguring the antenna array may include activating one or more sector antennas, and/or deactivating at least one sector antenna. The determination of an ideal sector can be based on detecting or receiving the strongest signal based on the change in orientation, and may select that sector antenna for activation, possibly deactivating any other active sector antennas with weaker reception.

In embodiments, the antenna array is an array of omnidirectional antennas. In response to detecting a change in orientation, a determination may be made as to whether the detected change meets or exceeds a specified threshold. The specified threshold is indicative of the degree of change that warrants the need to alter the antenna orientation. The threshold may be a specified change in angle, such as azimuthal angle, or possibly a three dimensional angle or a set of angles such as Euler angles, among other means of expressing changes in orientation. If it is determined that the change in orientation meets or exceeds the threshold, then new beamforming coefficients, or other beam parameters, such as phase relationships, may be determined by recalibrating the antenna array in response to the detected change in orientation.

The beamforming coefficients may be determined as part of a recalibration procedure. In various embodiments, the recalibration of the antenna array may be performed using any explicit or implicit techniques in accordance with the IEEE 802.11 wireless transmission protocol, among others. In one embodiment, the method may include receiving channel state information (CSI), from an AP, and recalibrating the antenna based on the received CSI. The channel state information can contain specified information or attributes of a communication link that can be used to assess transmission/reception conditions, including, for example, effects of scattering, fading, and/or power decay with distance, which may facilitate adaptation of the antenna array configuration to current channel conditions.

In other examples when the change in orientation meets or exceeds the threshold, then new beamforming coefficients may be determined in response to the detected change in orientation without recalibrating the antenna array. The determination of the new beamforming coefficients may be made via any of a variety of techniques that do not include recalibration, including simple interpolation or extrapolation, statistical models, heuristics, neural networks, support vector machines, fuzzy logic, rule-based systems, historical data, lookup tables, and so forth, as desired. More generally, any technique that correlates absolute or relative changes in orientation with beam parameter values may be utilized as desired. Determining the new antenna configuration in this manner results in significant savings in time, power consumption, and computational bandwidth. There is also the additional benefit of a faster response time and a reduction in consumption of the wireless medium since the device does not have to request a new CSI and wait for its arrival.

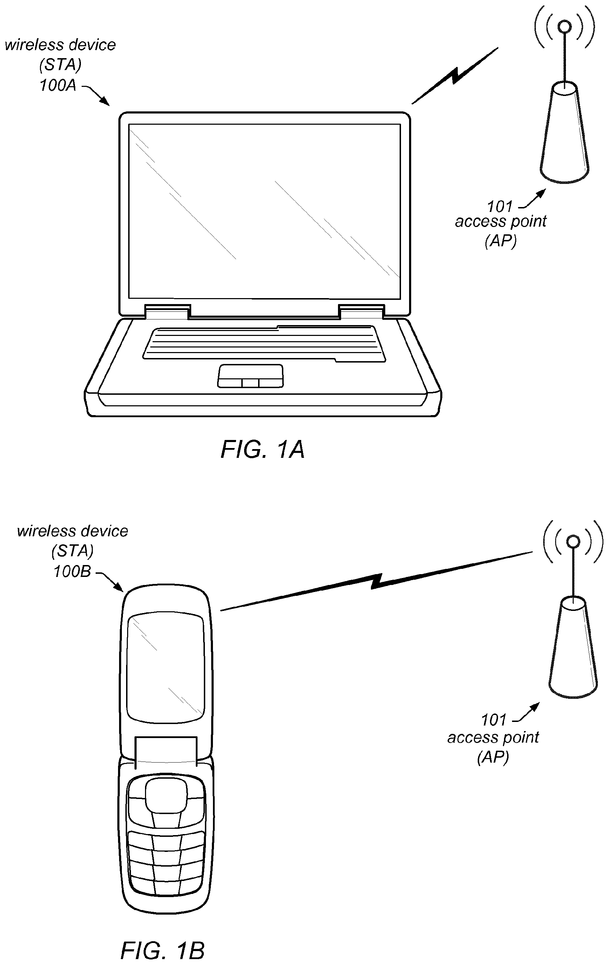

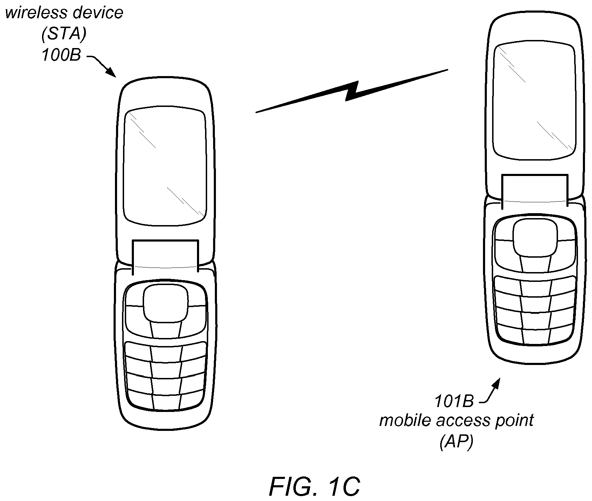

Figures 1A and 1B illustrate exemplary mobile wireless devices 100A and 100B. As indicated, such mobile wireless devices may be referred to as STAs (abbreviation for "stations" per the IEEE 802.11 wireless communication standard). A STA may be a mobile wireless device or an AP as shown in Figure 1C described below.

As shown in Figure 1A, in some embodiments, the mobile wireless device 100A may be a portable computer or other mobile computing device, such as a tablet computer. Alternatively, as shown in Figure 1B, the mobile wireless device 100B may be a handheld communication device. For example, the mobile wireless device 100B may be a cell phone or smart phone or other similar mobile wireless devices. However, it should be noted that other mobile wireless devices are envisioned, such as personal digital assistants, multimedia players (portable or stationary), routers, and/or other mobile devices / computing systems which are operable to use wireless communication, including, for example, wireless communication devices in vehicles. Note that as used herein, embodiments of elements denoted with alpha-numeric reference numbers such as 100A, 100B, etc., may be referred to generically or collectively without the alphabetic component, for example, 100. As shown in Figures 1A and 1B, the mobile wireless device 100 may be configured to communicate wirelessly with a wireless transceiver, such as AP 101.

The mobile wireless device 100 may include a motion sensor that can determine the orientation of the device or its antenna array. The term "motion sensor" refers to a component that detects movement or changes in a device's movement, which may be accomplished by directly detecting a change in orientation or by determining a relative difference in the change of position. Examples of the motion sensor can include one or more accelerometers, one or more magnetic sensors, one or more optical sensors, one or more position sensors, one or more orientation sensors, and/or one or more gyroscopes. The motion sensor may be implemented using any technology desired, including, for example, microelectromechanical systems (MEMS) technology.

Note that motion sensors may include orientation sensors and be included in mobile devices, such as gaming devices, locationing devices such as GPS (Global Position System) devices, and some smartphones, etc., for uses such in gaming, text-orientation, etc. In some embodiments, these pre-existing motion sensors may be used to detect the orientation of the device or the device's antenna array, as described herein. In other words, in some embodiments, the mobile wireless device 100 may have one or more motion sensors for performing orientation functionality for the device for purposes that may be otherwise unrelated to the functionality disclosed herein, and these motion sensors can be used to implement embodiments described herein. The use of these existing motion sensors may provide savings with regard to the design, operation and manufacture of the device.

Figure 1C illustrates an embodiment in which a handheld mobile wireless device, such as a cell phone, operates as a mobile AP. More specifically, Figure 1C illustrates a mobile wireless device (STA) 100B communicating with another wireless device 101B, which operates as a mobile access point. Thus, in various embodiments, the techniques disclosed herein may be utilized in any STA to STA communications, including STA to AP communications.

Attention now turns to a discussion on beamforming. The IEEE 802.11n 2009 standard offers beamforming techniques to create a virtual array of antennas that form high-gain beams focused at client mobile wireless devices. Focusing beams has the impact of increasing range and lowering overall environmental interference. Specifically, rather than radiate energy in all directions, transmit energy is focused directly at the intended receiver. Such a focused beam ensures that the majority of the energy transmitted will reach the proper receiver. In addition, focused beams may reduce the amount of energy sent in other directions and thereby cause less interference with other wireless links.

Maximizing the accuracy of these beams is important to achieving the highest effective throughput. Unless a signal can be sufficiently sustained from transmitter to receiver, errors and noise may erode throughput. For example, coding losses, lack of phase alignment, and marginal demodulation between multiple receivers results in higher bit error rates (BER) that may lead to more retransmissions, wasted signal energy, and greater interference.

Transmit Beamforming (TxBF) is a technology that enhances the reliability and performance of beamformed links by allowing the transmitter to generate signals that can be better received. Beamforming may use sounding techniques to align the transmitter with the receiver. The transmitter sends a signal and listens for a response from the receiver. By changing the characteristics of the transmission, such as by modifying beam parameters such as beam coefficients or phase relationships, the transmitter can hone in on the receiver's location to tune the beam to be as narrow as possible. This process is referred to as calibration (or recalibration), and thus may include determining transmission and/or reception conditions.

With open loop beamforming techniques, the transmitter is effectively forced to estimate where the receiver is and whether a change would improve or degrade signal reception. When signals and reflections arrive in phase, they add their energy to create the strongest possible signal. However, when they arrive out of phase, they begin to destructively interfere with each other, reducing the signal energy reaching the receiver. Ideally, transmitted signals and their reflections arrive phase-aligned at the receive antenna. One example of open loop beamforming is often referred to as implicit beamforming. Implicit beamforming tasks the transmitter to determine beamforming coefficients (i.e., phase, amplitude and/or timing adjustments) assuming a reciprocal communication channel and typically based upon one or more signals sent by the receiver to the transmitter.

Closed loop TxBF techniques improve accuracy by enabling the receiver to provide direct feedback to the transmitter to maximize the phase alignment of signals and their reflections. Closed loop TxBF opens a channel to the transmitter that allows the receiver to provide specific data on how well it is receiving signals. In this way, the transmitter can more quickly and accurately assess the optimal beam to use. The final result of closed loop TxBF is a relatively accurate steering matrix that may be applied to signals before transmission. One example of closed loop beamforming is often referred to as explict beamforming. Explicit beamforming tasks the receiver to determine beamforming coefficients based upon one or more signals sent by the transmitter to the receiver. These coefficients are then sent to the transmitter .

Generally, receive and transmit antennas in an antenna array may operate simultaneously through the respective parallel receive and transmit chains to perform beamforming, where antenna signals from multiple omnidirectional antennas are combined to maximize performance via determining or updating beamforming coefficients. The beamforming coefficients may configure the antennas to constructively and destructively interfere, resulting in an effective directional antenna pattern.

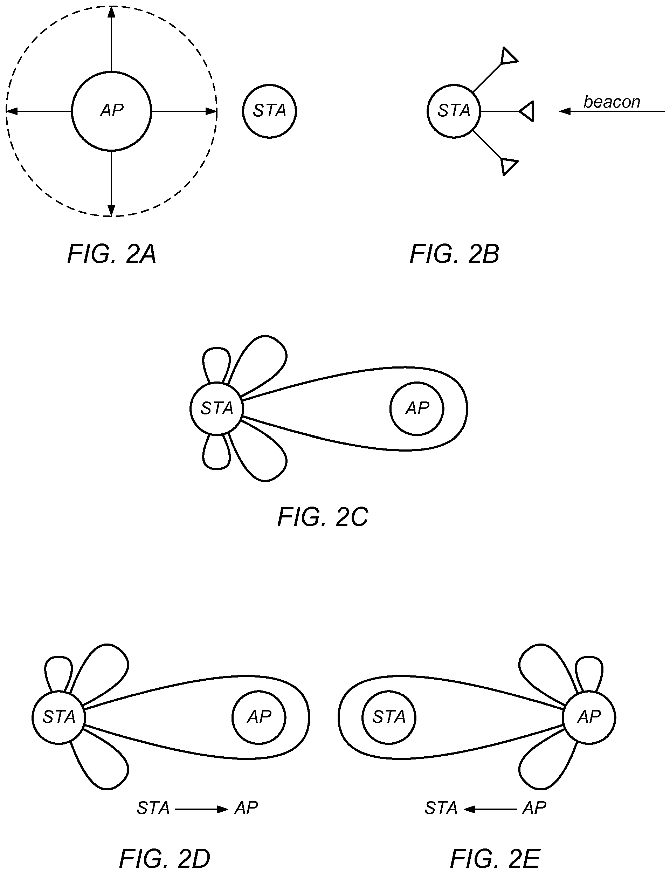

Figures 2A - 2E illustrate the use of beamforming in an array of omnidirectional antennas to facilitate communication between a STA and an AP, although the techniques shown also apply generally to STA-STA communications. Figure 2A illustrates an AP with omnidirectional antenna coverage and a STA. In this exemplary system, the AP sends out an omnidirectional beacon frame or beacon every 100ms.

Figure 2B illustrates reception by the STA of a beacon from its associated AP. The STA receives the beacon and determines the best way to receive transmissions from the AP. For example, as shown in Figure 2C, based on the STA's determined geometric or geographical relationship with the AP, the STA may adjust its beam parameters, such as beamforming coefficients, to focus the collective antenna array in the direction of the AP, thereby improving communication capability with the AP. The STA may then transmit to the AP based on the beam parameters it calculated based on the omnidirectional beacon.

As Figures 2D and 2E illustrate, this technique may be used by both the STA and the AP (or, more generally, by both of two STAs) to improve transmission and reception between the devices. In other words, both the STA and the AP may perform beamforming techniques to determine how to improve or optimize reception and transmission between the STA and the AP. Thus, every beacon transmission which is received by the STA may cause an may cause an adjustment to the receive antenna array pattern.

Other beamforming techniques can be used herein, such as those described in U.S. Patent No. 7,366,089, entitled "Apparatus and Method of Multiple Antenna Receiver Combining of High Data Rate Wideband Packetized Wireless Communication Signals", filed on Oct. 8, 2003, as well as U.S. Patent No.7,385,914, entitled, "Apparatus and Method of Multiple Antenna Transmitter Beamforming of High Data Rate Wideband Packetized Wireless Communication Signals", also filed on Oct. 8, 2003.

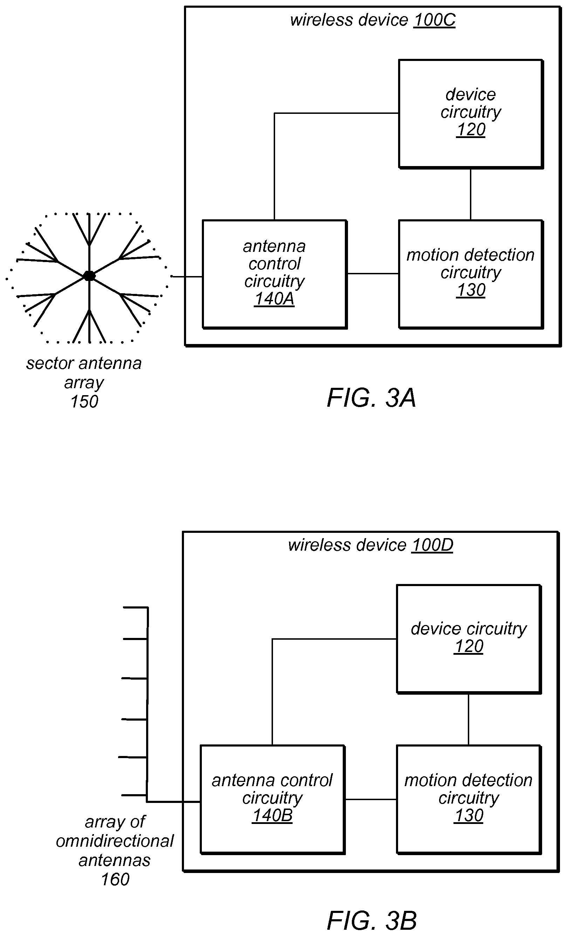

Figures 3A and 3B are block diagrams of exemplary mobile wireless devices 100C, 100D that may include device circuitry 120 for performing various functions of the mobile wireless device. The mobile wireless devices 100C, 100D may also comprise motion detection circuitry 130 which may use or implement any of the various techniques for detecting a change in the antenna array orientation. The motion detection circuitry 130 includes a motion sensor, such as, gyroscope(s), accelerometer(s), magnetic sensor(s), optical sensor(s), position sensor(s), orientation sensor(s), micro-electro-mechanical systems (MEMS), location component(s) providing GPS or cell-based triangulation functionality, and so forth.

The mobile wireless devices 100C, 100D may also include antenna control circuitry 140A, 140B, which may be coupled to at least one antenna array, such as the sector antenna array 150 shown in Figure 3A or the antenna array 160 shown in Figure 3B. The antenna control circuitry 140 may be configured to control the antenna array 150, 160. More specifically, the antenna control circuitry 140 may operate to reconfigure the antenna array 150, 160 as disclosed herein.

Each of the circuitries 120, 130, and/or 140 may be implemented using any one or more technologies, such as analog logic, digital logic, a processor and memory (such as a CPU, DSP, microcontroller, etc.), an ASIC (application specific integrated circuit), an FPGA (field programmable gate array), mechanical and/or electrical components, actuators, servos, or any combination of the above.

Thus, the mobile wireless device 100 may include an antenna array 150, 160 for receiving and/or transmitting wireless signals, antenna control circuitry 140A, 140B for controlling the antenna array 150, 160 and a motion detection circuitry 130 for detecting changes in orientation of the mobile wireless device 100. The mobile wireless device 100 may also have circuitry for performing various other functions of the device, for example, device circuitry 120, as would be known to one of ordinary skill in the art.

The antenna control circuitry 140A, 140B may utilize detected changes in the orientation of the wireless device to control the configuration of the antenna array. In other words, information from the motion sensor(s) may be used to detect a change in orientation of the mobile wireless device or its antenna array. This information may be used to detect the need for, trigger, or even to determine, a reconfiguration of the mobile wireless device's antenna.

For example, in examples where the antenna array is a sector antenna array 150, as shown in Figure 3A, the reconfiguration may involve selecting one or more sectors from within the sector antenna 150 which may be used. Antenna control circuitry 140A controls which of the sector antennas to use. In some examples, it may be useful to know not just that a change in antenna configuration is needed, but also an indication of which antenna is most appropriate based on various factors, such antenna position, signal strength, etc. Moreover, in some examples, if the mobile wireless device knows the previous orientation and the relative degree of change in orientation, then the mobile wireless device may be able to determine the ideal sector from solely the degree of change.

In embodiments where the antenna array includes multiple omnidirectional antennas, such as shown in Figure 3B, the reconfiguration may involve a change in beamforming coefficients, and/or other configuration parameters for the antennas, such as phase relationships among the antennas.

For gaming applications running on a mobile wireless device, there are often sudden movements of the mobile wireless device often resulting in rapid changes in the orientation of a mobile wireless device's antenna. The motion detection circuitry 130 would detect these sudden movements and notify the antenna control circuitry 140A, 140B of the change in orientation. This notification would allow the antenna control circuitry 140A, 140B to update the antenna array configuration when the orientation is changing rapidly, while allowing longer use of configurations when the orientation is changing more slowly.

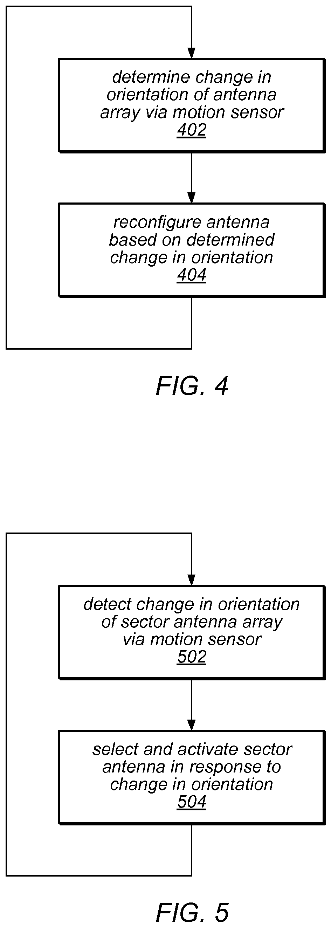

Figure 4 is a flowchart illustrating an exemplary embodiment of a method 400 for configuring an antenna array 150, 160 of a mobile wireless device 100. The method 400 may be used in conjunction with any of the systems or mobile wireless devices shown in the above Figures, among other mobile wireless devices, where, as indicated above, the mobile wireless device may include an antenna array for receiving and/or transmitting wireless signals, a motion sensor coupled to the antenna array, and circuitry coupled to the antenna array and the motion sensor. Additional method elements may also be performed as desired. As shown, the method 400 may operate as follows.

In step 402, a change in orientation of the antenna array 150, 160 may be detected via the motion sensor in the motion detection circuitry 130. For example, in one exemplary embodiment, the motion detection circuitry 130 may monitor or poll the motion sensor. The motion detection circuitry 130 may compare new values from the motion sensor to a stored value corresponding to the most recent reconfiguration, and determine whether the difference exceeds some specified threshold. Note that changes in orientation of the antenna array may be due to any of various types of motion of the wireless device. Exemplary types of motion include rotations and/or translations of the mobile wireless device. As another example, moving in a non-radial direction with respect to a signal source may change the orientation of the device's antenna array with respect to the signal source without rotation.

In step 404, the antenna array 150, 160 may be reconfigured by the antenna control circuitry 140A, 140B in response to the detected change in orientation. In one embodiment, the first circuitry may determine an ideal configuration and reconfigure the antenna array 150, 160 within an acceptable tolerance of the ideal configuration. For example, within 10%, 5%, 2%, or 1% of the ideal configuration, depending on acceptable tolerances of a given application.

Figure 5 is a flowchart of method 500 for configuring a sectorized antenna array of a mobile wireless device according to one example. The method shown in Figure 5 may be used in conjunction with any of the systems or devices shown in the above Figures, where the device includes a sectorized antenna array for receiving and/or transmitting wireless signals. In various examples, some of the method elements shown may be performed concurrently, in a different order than shown, or may be omitted. Additional method elements may also be performed as desired. As shown, the method 500 may operate as follows.

In step 502, a change in orientation of the sector antenna array 150 may be determined via the motion sensor in the motion detection circuitry 130. The motion detection circuitry 130 may monitor or poll the motion sensor. The motion detection circuitry 130 may compare new values from the motion sensor to a stored value corresponding to the most recent reconfiguration, and may determine the difference, such as a difference in orientation angle(s). In one example, the motion detection circuitry may also determine whether the difference exceeds a specified threshold. Thus, in some examples, the motion detection circuitry 130 may detect a change in orientation, and may also determine the amount of the change.

In step 504, the method 500 may select and activate a sector antenna of the sector antenna array 150 in response to the detected change in orientation. Thus, reconfiguring the antenna array may include activating one or more sector antennas, and/or deactivating at least one sector antenna. For example, the method may determine which of the sector antennas detects or receives the strongest signal, and may select that sector antenna for activation. In some cases, the method may deactivate other active sector antennas with weaker reception. In some examples, the antenna control circuitry 140A may determine an improved configuration for the sector antenna array 150 without determining and performing an analysis of current conditions. In some examples, the reconfiguration may only be performed if the difference in orientation, or amount of change in orientation, exceeds a specified threshold.

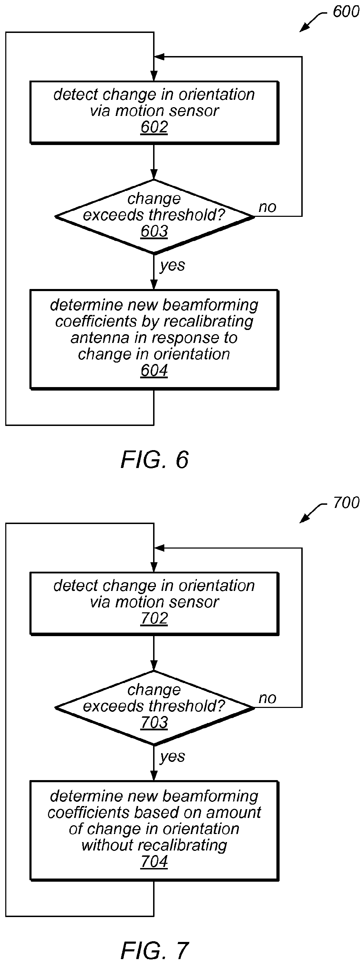

Figures 6 is a flowchart illustrating method 600 for configuring an array of two or more omnidirectional antennas of a mobile wireless device based on a change in orientation of the antenna array by recalibrating the antenna array, according to one embodiment. The method 600 may be used in conjunction with any of the systems or devices shown in the above Figures, where the device includes an array of omnidirectional antennas for receiving and/or transmitting wireless signals. The mobile wireless device 100 may include a motion sensor in the motion detection circuitry 130 coupled to the antenna array 160, and the antenna control circuitry 140B coupled to the antenna array 160 and the motion sensor 130. Additional method elements may also be performed as desired. As shown, the method 600 may operate as follows.

In step 602, a change in orientation of the antenna array 160 may be determined by the motion detection circuitry 130. The motion detection circuitry 130 notifies the antenna control circuitry 140B. In step 603, a determination may be made as to whether the detected change meets or exceeds a specified threshold. For example, the threshold may be a specified change in angle, such as azimuthal angle, or possibly a three dimensional angle or a set of angles such as Euler angles, among other means of expressing changes in orientation. If the detected change does not meet or exceed the threshold (step 603-no), then the method may return to 602, and continue to monitor for a detected change in orientation. Otherwise, if it is determined that the change in orientation does meet or exceed the threshold (step 603-yes), then in step 604, new beamforming coefficients (or other beam parameters, such as phase relationships) may be determined by recalibrating the antenna array in response to the detected change in orientation.

The new beamforming coefficients may be determined as part of a recalibration procedure. In various embodiments, the recalibration of the antenna array may be performed using any explicit or implicit techniques well known in the art. For example, in one embodiment, the method may include receiving channel state information (CSI), for example, from an AP, and recalibrating the antenna based on the received CSI. Note that as used herein, the term "channel state information" refers to specified information or attributes of a communication link that can be used to assess transmission/reception conditions, including, for example, effects of scattering, fading, and/or power decay with distance, which may facilitate adaptation of the antenna array configuration to current channel conditions.

Thus, in embodiments where the antenna array includes two or more omnidirectional antennas, reconfiguring the antenna array may include modifying beamforming coefficients of, and/or adjusting phase relationships among, two or more antennas in the antenna array, based on determined conditions via a recalibration process.

Figure 7 is a flowchart illustrating an example of method 700 for configuring an array of two or more omnidirectional antennas of a mobile wireless device based on a change in orientation of the antenna array, without recalibrating the antenna array. The method 700 shown in Figure 7 may be used in conjunction with any of the systems or devices shown in the above Figures, where the device includes an array of omnidirectional antennas for receiving and/or transmitting wireless signals. As with the method of Figure 6, the device may include a motion sensor coupled to the antenna array, and circuitry coupled to the antenna array and the motion sensor. In various examples, some of the method elements shown may be performed concurrently, in a different order than shown, or may be omitted. Additional method elements may also be performed as desired. Note that descriptions of method elements already described above may be abbreviated. As shown, the method 700 may operate as follows.

In step 702, a change in orientation of the omnidirectional antenna array 160 may be determined via the motion sensor in the motion detection circuitry 130. In step 703, a determination may be made as to whether the detected change meets or exceeds a specified threshold. If the detected change does not meet or exceed the threshold (step 703-no), the method 700 may return to step 702, and continue to monitor for a detected change in orientation. Otherwise, if it is determined that the change in orientation meets or exceeds the threshold (step 703-yes), new beamforming coefficients, may be determined in response to, and based on, the detected change in orientation, without recalibrating the antenna array (step 704). For example, the determination of the new beamforming coefficients may be made via any of a variety of techniques, such as, including simple interpolation or extrapolation, statistical models, heuristics, neural networks, support vector machines, fuzzy logic, rule-based systems, historical data, lookup tables, and so forth. More generally, any technique that correlates absolute or relative changes in orientation with beam parameter values may be utilized as desired. Determining the new configuration in this way, where the antenna array is reconfigured without recalibrating the antenna, may result in significant savings in time, power consumption, and computational bandwidth.

In some embodiments, combinations of the above-described techniques may be utilized. For example, for quick optimization or improvement, small changes in orientation, up to some cumulative maximum, special geometries, where the change in orientation is 180 degrees, and so forth, the reconfiguration without recalibration approach may be used. Otherwise, the reconfiguration may include recalibrating the antenna. In other embodiments, any of various conditions may be specified for determining which approach to use, possibly dynamically.

Although the embodiments above have been described in considerable detail, numerous variations and modifications will become apparent to those skilled in the art once the above disclosure is fully appreciated. It is intended that the following claims be interpreted to embrace all such variations and modifications. Although the embodiments described herein have been discussed with respect to an access point, the embodiments can be applied to systems or networks where there are no access points. For example, in an ad hoc network, the functionality of an access point can be performed by one or more peer mobile wireless devices.

## Claims

1. A mobile wireless device (100D), comprising:
an antenna array (160) comprising an array of omnidirectional antennas for receiving and/or transmitting wireless signals;
a motion sensor coupled to the antenna array, the motion sensor configured to detect a change in orientation of the antenna array;
means for determining whether the detected change meets or exceeds a threshold; and
a first circuitry (140B) coupled to the antenna array, the first circuitry configured to receive channel state information, CSI, and to reconfigure the antenna array, based on the received CSI, if it is determined that the detected change in orientation meets or exceeds the threshold, wherein the CSI comprises attributes associated with a communication link for assessing transmission and reception conditions comprising effects of scattering, fading, and/or power decay with distance, and wherein reconfiguring the antenna array comprises determining beam parameters, such as phase relationships, for the antenna array as part of a recalibration procedure for determining an ideal antenna configuration in response to the antenna array's movement.

2. The mobile wireless device of claim 1, wherein the beam parameters include one or more of beamforming coefficients and phase relationship parameters.

3. The mobile wireless device of any of the preceding claims, wherein the motion sensor comprises one or more of:
one or more accelerometers;
one or more gyroscopes;
one or more magnetic sensors;
one or more optical sensors;
one or more orientation sensors; or
one or more position sensors.

4. A method for wireless communication, the method comprising:
providing at least one mobile wireless device having an antenna array comprising an array of omnidirectional antennas for receiving and/or transmitting wireless signals, the mobile wireless device having a motion sensor coupled to the antenna array, and first circuitry coupled to the antenna array and the motion sensor;
detecting, via the motion sensor, a change in orientation of the antenna array on a real-time basis;
determining whether the detected change meet or exceeds a threshold;
receiving channel state information, CSI; and
reconfiguring the antenna array via the first circuitry, based on the received CSI, if it is determined that the detected change in orientation meets or exceeds the threshold, wherein the CSI comprises attributes associated with a communication link for assessing transmission and reception conditions comprising effects of scattering, fading, and/or power, and wherein reconfiguring the antenna array comprises determining beam parameters, such as phase relationships, for the antenna array as part of a recalibration procedure for determining an ideal antenna configuration in response to the antenna array's movement.

5. The method of claim 4 wherein the beam parameters include one or more of beamforming coefficients and phase relationship parameters.

## Patentansprüche

1. Mobiles drahtloses Gerät (100D), das Folgendes umfasst:
ein Antennenarray (160), das ein Array von Rundstrahlantennen zum Empfangen und/oder Senden von drahtlosen Signalen umfasst;
einen mit dem Antennenarray gekoppelten Bewegungssensor, wobei der Bewegungssensor zum Erkennen einer Änderung der Orientierung des Antennenarray konfiguriert ist;
Mittel zum Feststellen, ob die erkannte Änderung einen Schwellenwert erreicht oder übersteigt; und
eine mit dem Antennenarray gekoppelte erste Schaltung (140B), wobei die erste Schaltung zum Empfangen von Kanalzustandsinformationen (CSI) und zum Umkonfigurieren des Antennenarray auf der Basis der empfangenen CSI konfiguriert ist, wenn festgestellt wird, dass die erkannte Orientierungsänderung den Schwellenwert erreicht oder übersteigt, wobei die CSI mit einer Kommunikationsverbindung zum Beurteilen von Sende- und Empfangsbedingungen assoziierte Attribute umfassen, umfassend Effekte von Streuung, Fading und/oder Leistungsabfall mit Entfernung, und wobei das Umkonfigurieren des Antennenarray das Bestimmen von Strahlparametern wie Phasenbeziehungen für das Antennenarray im Rahmen eines Neukalibrationsverfahrens zum Bestimmen einer idealen Antennenkonfiguration als Reaktion auf die Bewegung des Antennenarray beinhaltet.

2. Mobiles drahtloses Gerät nach Anspruch 1, wobei die Strahlparameter eines oder mehrere aus Strahlformungskoeffizienten und Phasenbeziehungsparametern beinhalten.

3. Mobiles drahtloses Gerät nach einem der vorherigen Ansprüche, wobei der Bewegungssensor eines oder mehrere der Folgenden umfasst:
einen oder mehrere Beschleunigungsmesser;
ein oder mehrere Gyroskope;
einen oder mehrere Magnetsensoren;
einen oder mehrere optische Sensoren;
einen oder mehrere Orientierungssensoren; oder
einen oder mehrere Positionssensoren.

4. Verfahren für drahtlose Kommunikation, wobei das Verfahren Folgendes beinhaltet:
Bereitstellen wenigstens eines mobilen drahtlosen Geräts mit einem Antennenarray, das ein Array von Rundstrahlantennen zum Empfangen und/oder Senden von drahtlosen Signalen umfasst, wobei das mobile drahtlose Gerät einen mit dem Antennenarray gekoppelten Bewegungssensor und eine mit dem Antennenarray und dem Bewegungssensor gekoppelte erste Schaltung umfasst;
Erkennen, über den Bewegungssensor, einer Änderung der Orientierung des Antennenarray auf einer Echtzeitbasis;
Feststellen, ob die erkannte Änderung einen Schwellenwert erreicht oder übersteigt;
Empfangen von Kanalzustandsinformationen CSI; und
Umkonfigurieren des Antennenarray über die erste Schaltung auf der Basis der empfangenen CSI, wenn festgestellt wird, dass die erkannte Orientierungsänderung den Schwellenwert erreicht oder übersteigt, wobei die CSI mit einer Kommunikationsverbindung zum Beurteilen von Sende- und Empfangsbedingungen assoziierte Attribute umfasst, umfassend Effekte von Streuung, Fading und/oder Leistung, und wobei das Umkonfigurieren des Antennenarray das Feststellen von Strahlparametern wie Phasenbeziehungen für das Antennenarray im Rahmen eines Neukalibrationsverfahrens zum Bestimmen einer idealen Antennenkonfiguration als Reaktion auf die Bewegung des Antennenarray umfasst.

5. Verfahren nach Anspruch 4, wobei die Strahlparameter Strahlformungskoeffizienten und/oder Phasenbeziehungsparameter beinhalten.

## Revendications

1. Dispositif sans fil mobile (100D), comprenant :
un réseau d'antennes (160) comprenant un réseau d'antennes omnidirectionnelles pour recevoir et/ou émettre des signaux sans fil ;
un capteur de mouvement couplé au réseau d'antennes, le capteur de mouvement étant configuré pour détecter un changement d'orientation du réseau d'antennes ;
un moyen de détermination que le changement détecté satisfait ou dépasse ou non un seuil ; et
une première circuiterie (140B) couplée au réseau d'antennes, la première circuiterie étant configurée pour recevoir des informations d'état de Canal, CSI, et reconfigurer le réseau d'antennes, sur la base des CSI reçues, s'il est déterminé que le changement d'orientation détecté satisfait ou dépasse le seuil, dans lequel les CSI comprennent des attributs associés à une liaison de communication pour évaluer des conditions d'émission et de réception comprenant les effets de diffusion, l'évanouissement, et/ou la réduction de la puissance avec la distance, et dans lequel la reconfiguration du réseau d'antennes comprend la détermination de paramètres de faisceau, tels que des relations de phase, du réseau d'antennes dans le cadre d'une procédure de réétalonnage pour déterminer une configuration d'antennes idéale en réponse au mouvement du réseau d'antennes.

2. Dispositif sans fil mobile selon la revendication 1, dans lequel les paramètres de faisceau comportent un ou plusieurs de coefficients de formation de faisceau et de paramètres de relations de phase.

3. Dispositif sans fil mobile selon l'une quelconque des revendications précédentes, dans lequel le capteur de mouvement comprend un ou plusieurs:
d'un ou plusieurs accéléromètres ;
d'un ou plusieurs gyroscopes ;
d'un ou plusieurs capteurs magnétiques ;
d'un ou plusieurs capteurs optiques ;
un ou plusieurs capteurs d'orientation ; ou
d'un ou plusieurs capteurs de position.

4. Procédé de communication sans fil, le procédé comprenant :
la fourniture d'au moins un dispositif sans fil mobile présentant un réseau d'antennes comprenant un réseau d'antennes omnidirectionnelles pour recevoir et/ou émettre des signaux sans fil, le dispositif sans fil mobile présentant un capteur de mouvement couplé au réseau d'antennes, et une première circuiterie couplée au réseau d'antennes et au capteur de mouvement ;
la détection, par l'intermédiaire du capteur de mouvement, d'un changement d'orientation du réseau d'antennes en temps réel ;
la détermination que le changement détecté satisfait ou dépasse ou non un seuil ;
la réception d'informations d'état de canal, CSI ; et
la reconfiguration du réseau d'antennes par l'intermédiaire de la première circuiterie, sur la base des CSI reçues, s'il est déterminé que le changement d'orientation détecté satisfait ou dépasse le seuil, les CSI comprenant des attributs associés à une liaison de communication pour évaluer des conditions d'émission et de réception comprenant les effets de diffusion, l'évanouissement, et/ou la puissance, et dans lequel la reconfiguration du réseau d'antennes comprend la détermination de paramètres de faisceau, tels que des relations de phase, du réseau d'antennes dans le cadre d'une procédure de réétalonnage pour déterminer une configuration d'antennes idéale en réponse au mouvement du réseau d'antennes.

5. Procédé selon la revendication 4 dans lequel les paramètres de faisceau comportent un ou plusieurs de coefficients de formation de faisceau et de paramètres de relations de phase.
